# EUROPEAN PATENT APPLICATION

(11) **EP 3 173 751 A1**
(43) Date of publication of application: **31.05.2017**
(21) Application number: 16195899.6
(22) Date of filing: 27.10.2016
(51) Int. Cl.: G01G 17/08, A01K 29/00

(54) **SYSTEM AND PROCEDURE FOR WEIGHING AND MARKING OF LIVESTOCK**

(30) Priority: 25.11.2015 ES 201531709
(71) Applicant: Compañía General de Compras Agropecuarias, S.L.U., 25191 Lleida (ES)
(72) Inventor: SALVADÓ GUALLAR, Jordi, 25191 LLEIDA (ES)
(74) Representative: Ungria López, Javier

(57) **Abstract**

The system incorporates a dynamic weighing platform (1) which indicates the weight value obtained. It comprises a control device (5), a detection system and a marking device (11). The dynamic weighing platform (1) is foldable and portable. The control device (5) comprises an interface for a user to interact with the system, with a data processor connected to the dynamic weighing platform (1). The detection system comprises at least two detection devices (9) with photocells connected to the control device (5). The marking device (11) comprises at least two actuators, to activate the corresponding two marking elements, connected to the control device (5). The invention also describes the procedure carried out by the system described.

## Description

### OBJECT OF THE INVENTION

This invention refers to a procedure for weighing and subsequent marking of livestock in a dynamic way, particularly suitable for pigs. The invention also describes the system via which said procedure is carried out.

The system and the procedure which are the subject of this invention allow automation of the process of weighing animals and their subsequent marking in different weight ranges.

The invention has a special application in the industry devoted to the rearing and operation of livestock, particularly pigs, and is particularly suitable for use in the industry monitoring livestock operations, a monitoring which includes tracking, for different health and commercial purposes, of the weight of the heads of livestock.

### TECHNICAL PROBLEM TO ADDRESS AND BACKGROUND OF THE

### INVENTION

There are currently different systems and procedures for the weighing and marking of livestock.

In the majority of cases, the procedure for weighing the livestock, particularly in pig-farming operations, involves an experienced technician viewing the different animals to be found in the different pens or pigsties in an operation.

The technician is responsible for visually inspecting the animals and, using criteria based fundamentally on his/her experience, each animal is marked and classified in a specific weight range.

Subsequently, on the basis of the range in which each animal has been included, each animal is marked manually as a means of checking.

The problem with this procedure is the subjective nature of assigning the weights, and also the problem of having to take a specialised technician to the site of the operation, to inspect the animals visually, in each of the pens.

Despite the problems considered, the same procedure has been in place for a long time, because of the drawbacks associated with alternative procedures.

In fact, the direct weighing of the animals using a more objective procedure, involving placing each animal on a weighing scale so that its precise weight can be determined, has different problems associated with it which, to date, have discouraged any weighing expert from weighing the animals directly.

Firstly, in operations comprising a large number of heads of livestock, the individual weighing of each of the animals on a weighing scale takes too long to be considered worthwhile.

Secondly, especially when considering the weighing of pigs, one must take into account the difficulty in handling these animals. In general, pigs are restless animals which are also extraordinarily strong, making them difficult to handle, as well as being easily startled. Consequently, weighing the pigs by making each animal climb onto a weighing scale and subsequently recording the weight of each individual in a group is a very costly process.

Thirdly, it must be considered that one of the requirements for sending the livestock to the slaughterhouse involves them being classified in a certain weight range. Any error in the classification of an animal in a certain range, because its real weight is outside the aforementioned range, either higher or lower, means that the remuneration received for this animal is lower than that initially agreed. Over the course of a year, these errors can mean very large sums for a farming operation.

Finally, the cost associated with having a device specifically designed for weighing livestock on a farm, or having to move the animals to a certain place so that they can be weighed and marked, is excessively high and thus unviable. The purpose of this invention is to solve the abovementioned problems by describing an innovative system of weighing and marking livestock and the procedure to carry this out, giving an accurate weight for each animal; the invention uses a weighing scale for weighing the animals dynamically, incorporating an electronic control, which can be moved from one farm to another because it is totally portable.

### BRIEF DESCRIPTION OF THE FIGURES

As part of the explanation as to how the system and procedure which are the object of this invention are embodied, the following figures have been included:
- Figure 1 shows an embodiment of the system for weighing and marking livestock.
- Figure 2 represents a dynamic weighing platform used in the invention.
- Figure 3 represents a control device.
- Figure 4 represents a detection device.
- Figure 5 represents a marking device.

Provided below is a list of the references used in the figures:
1. Dynamic weighing platform.
2. Chassis.
3. Handles.
4. Hinges.
5. Control device.
6. Switch.
7. Screen.
8. Light indicator.
9. Detection device.
10. Photocell.
11. Marking device.
12. Actuator.
13. Adjustable structure.
14. Support.
15. Aerosol.
16. Valve.
17. Nozzle.
18. System of clamps.

### DESCRIPTION OF A PREFERRED EMBODIMENT OF THE INVENTION

This invention refers, as mentioned previously, to a system for weighing and marking livestock dynamically.

This invention also refers, as mentioned, to a procedure for weighing and marking livestock.

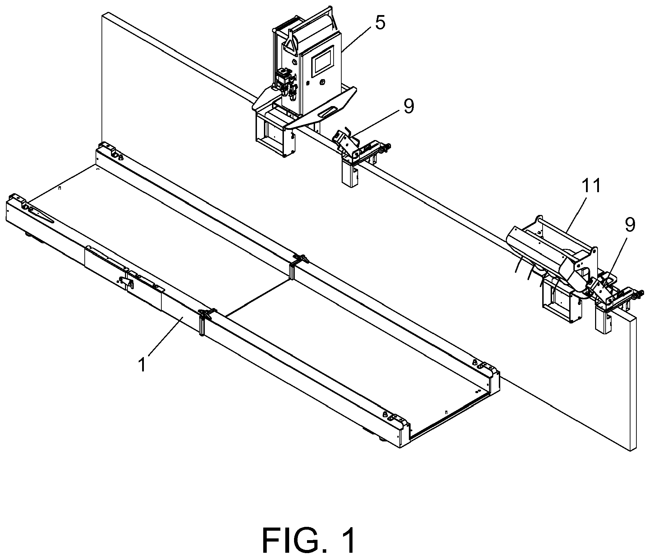

As can be seen in figure 1, in a preferred embodiment, the system comprises principally the following elements:
- a weighing scale for weighing the animals,
- a detection system which incorporates detection devices (9) for detecting the position of an animal on the weighing scale,
- a marking device (11) which incorporates at least one element for marking the animals to be weighed,
- a control device (5), which can be programmed to determine ranges of values to classify an animal by its weight, which receives information of the weight measured on the scale and sends information which determines the procedure in the marking device (11).

One of the principal characteristics of the invention is the portable nature of the weighing and marking system, so that all the elements which make up the system of the invention are completely independent. In fact, the system is installed by individually and independently positioning each of the detection devices (9), marking devices (11) and control devices (5), described previously, using a system of clamps (18) incorporated close to the weighing scale. Subsequently, the four elements are connected electrically, either via cables or a wireless system, for data transmission.

Below, each of these elements is described in detail.

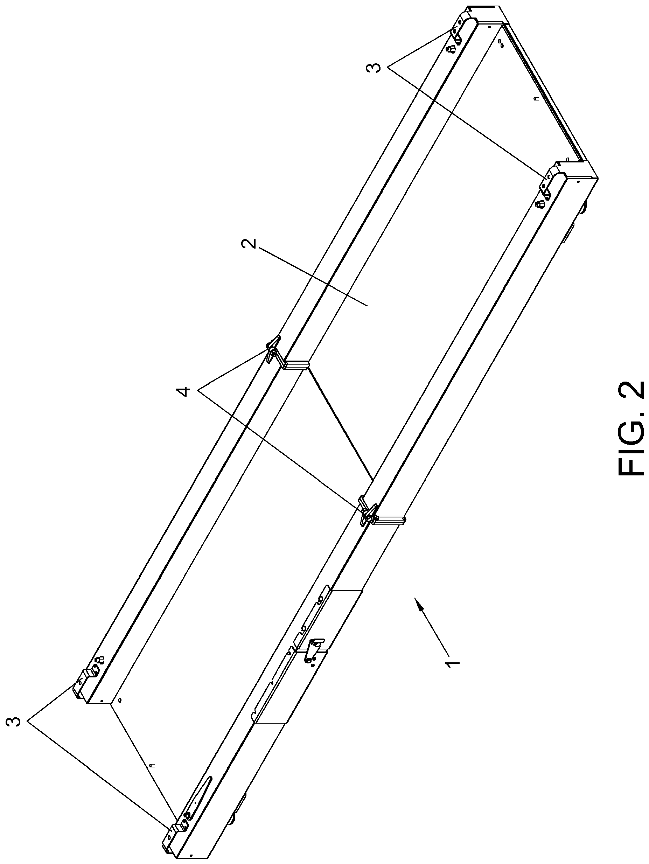

The weighing scale is the initial element of the invention. It is a dynamic weighing platform (1) of those known in the state of the art. As can be seen in figure 2, the platform consists of a chassis (2) which withstands the weight of the animals, preferably made of metal. The chassis (2) includes handles (3) and central hinges (4) to facilitate handling and transport. The platform (1) incorporates in its interior an array of load cells, not shown in the figures, connected electronically, preferably by wireless means, to the control device (5), which is responsible for displaying the animal's weight on a screen (7). The load cells are each of the transducers, incorporated in the platform (1), used to convert the measured weight of an animal into an electrical signal. Subsequently, a transmitter is responsible for converting the electrical signal into a value which reflects the weight measurement, and for sending the electrical signal obtained to the control device (5) for processing.

The load cells allow the weight to be measured irrespective of the load position on the platform (1). This means that the animal can be weighed from the moment it climbs onto the platform (1), and the measurement will remain stable from the time the animal is completely positioned on the platform (1) until it begins to leave the platform (1).

All the components are perfectly integrated into the dynamic weighing platform (1), with no cabling or visible external elements which might startle the animals or create problems in the correct functioning of the system.

In addition, the platform (1) is preferably located at floor level, so that the animal does not even detect that it has to climb onto a platform (1), merely a change in the surface it is standing on, so that it is not startled and does not refuse to access the platform (1). For this reason, the platform (1) chassis (2) material, in addition to being preferably made of metal, must also be non-slip and, preferably, of a colour which does not stand out, i.e. as similar as possible to the floor the animal normally stands on. Given that the weighing process is dynamic, i.e. the animals do not have to stop, the platform (1) has large dimensions, with a minimum length of 150cm and a width of the corridor through which the animals normally pass, so that they are not startled or refuse to cross the platform (1).

The remaining elements of which the system is comprised are installed independently of the dynamic weighing platform (1), as can be seen represented in figure 1, on a wall or a transportable fence, for example. Because the chassis (2) can be folded using the hinges (4), the platform (1) is a component which can be transported using the incorporated handles (3). The fact that all the elements which make up the system are totally transportable and independent makes the system of the invention a fully portable system for weighing and marking livestock, despite the fact that it is a dynamic weighing scale, something completely unknown until now in the state of the art.

To be consistent with the portable nature of the system of the invention, the electrical power is, preferably, provided by direct voltage which can be supplied either by a replaceable battery or via the general electricity supply using the corresponding transformer.

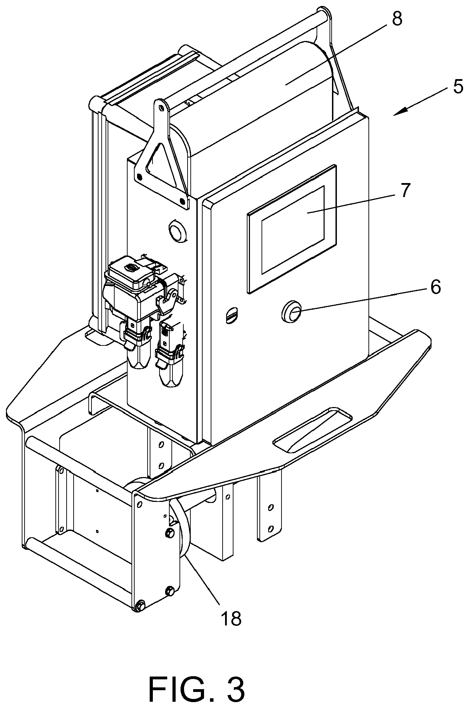

The second element of the system, represented in figure 3, is the control device (5). As mentioned previously, one of the functions it carries out is to process the signals received from the dynamic weighing platform (1).

The control device (5) is also responsible for receiving and processing signals and data from the other elements in the system. In addition, it incorporates an interface allowing a user to interact with the system.

The interface comprises a switch (6) and a screen (7), preferably a touch screen, which the user can use to configure the operation of the system. The screen (7) can be used to adjust the system operating parameters and to view the status of what is happening in the system. It can also be used to consult other information, such as summaries, historical information, etc.

The control device (5) also incorporates a light device (8) with different coloured lights to indicate the status of the operation, referring to the weighing status or the range of the measured weight value. The purpose of the control device (5) is to ensure, once the system is operating, that nobody has to be in front of the screen (7) to find out the status of the process, thereby providing greater fluidity.

The interface can be connected to different peripherals for processing the system information. In addition, the system can be configured by remote access, so that nobody needs to be present in the installation in which the system is located. Similarly, if any incident occurs, the system can also be programmed, for example, to stop the animals passing over the platform (1), either in situ or remotely. This allows the system to be accessed via the interface to carry out tasks of supervision, modification or updating of the initially defined process. Any stoppages in the system or incidents are notified via the light indicator (8) and, in addition, via an alert in the system which generates a communication to a remote device such as a computer, tablet or mobile telephone.

The control device (5) also incorporates a data processor which is configured to emit the corresponding signal depending on the range of the value measured on the dynamic weighing platform (1). The ranges of values defined correspond to the configuration of the marking device (11). The data processor contains the system logic for taking the decisions necessary to activate the marking device (11).

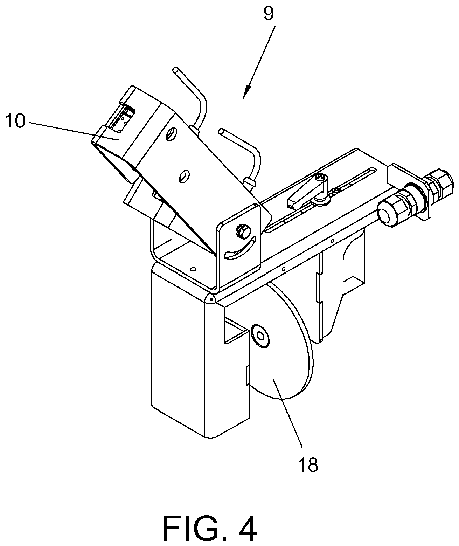

The following element of the system is the detection system, represented in figure 4. Its function is to detect when the animal enters and leaves the weighing platform. The detection system comprises at least two detection devices (9), with each detection device (9) incorporating a photocell (10).

The first photocell (10) is responsible for indicating to the system that an animal is fully positioned on the weighing scale so that, when the photocell (10) is activated, it sends a signal to the control device (5) so that the weight value of the animal can be entered in the system. For this reason, the first photocell (10) must be located at a distance from the entry to the platform (1), which takes into account the average size of the animals to be weighed and the speed at which they are moving forward.

The purpose of the second photocell (10) is to indicate to the control device (5) that the animal has started to leave the platform (1) and that the activation signal must be sent to the marking device (11).

The following element included in the system is the marking device (11), responsible for carrying out the last phase of the invention, which is to classify the animals and mark them according to their weight.

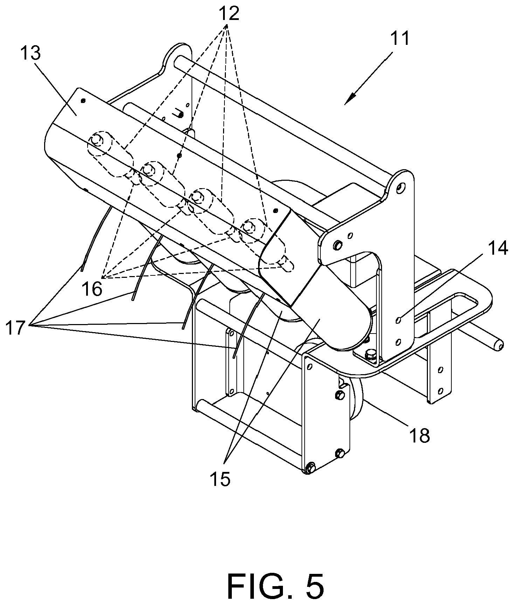

In the preferred embodiment represented in figure 5, the marking device (11) comprises an adjustable structure (13) which contains a support (14) to house an array of paint sprays (15) and actuators (12) responsible for activating the sprays (15) by means of the signal sent from the control device (5). The function of the sprays (15) is to mark the animals by spraying them with coloured paint. Each spray (15) is of a different colour and is supplied in cylindrical containers which fit in the support (14). They incorporate a valve (16) to force out the paint under pressure and a nozzle (17) through which the paint is delivered. The nozzles (17) are preferably in the form of lengthened tubes, positioned to point at the area through which the animals pass, with the support (14) adjusted appropriately so that, when the sprays (15) are activated, the paint is directed at the animals and they are marked effectively.

Each of the actuators (12) is located in the vicinity of the valve (16) on each of the paint sprays (15). Each of the actuators (12) is activated or ignored according to the signal received from the data processor located in the control device (5). In this way, the corresponding paint sprays (15) are selected to print the colour or combination of colours identifying the weight range into which the weighed animal has been classified. Preferably, four sprays are used, to allow a sufficiently broad range of classification of the animals. The actuator (12) may, for example, be an electromagnet.

Communication via the data processor in the control device (5) with the actuators (12), with the photocells (10) and with the dynamic weighing platform (1) can be carried out by means of cabled electrical connections and also by means of wireless connections, such as Bluetooth.

One example of application of the system of the invention could be a detection system programmed for weights between 25kg and 300kg, in ranges configured as the user responsible for programming the system wishes; this may involve any number of ranges and desired size, and the size ranges need not even be equal. The number of actuators (12) will coincide with the defined number of ranges, so that each range can be assigned an actuator (12) or combination of actuators (12).

In the preferred embodiment, a marking device (11) incorporating 4 sprays (15) of different colours has been represented, This means, as stated previously, that more than 4 ranges can be defined, as there can be ranges defined by a single colour or by a combination of colours, using two or more sprays (15) simultaneously for each of them.

Thus, if a value of 267kg is obtained on the platform (1), the processor will select sprays (15) 3 and 4, for example, and will ignore the rest. In this way, when the second photocell (10) detects the animal and sends the order to activate to the marking device (11), the actuators (12) positioned on sprays (15) 3 and 4 will begin to operate, spraying paint in these two colours onto the animal to be marked, with the animal thus being correctly identified according to its weight range.

The marking device (11), instead of being configured via sprays (15) activated by actuators (12), may be configured to use any other marking system, such as the implantation of an electronic chip, coloured strips or any other distinctive element.

It must be considered that both the control device (5), and the detection devices (9) and the marking device (11), as represented in figures 3, 4 and 5, respectively, incorporate a system of clamps (18) for fixing to a support, as represented in figure 1, which shows the complete system. This support is separate from the invention and may be, for example, a pre-built or artificial wall, a fence or any other element which can act as a support. In addition to this, the functioning of all the elements (1, 5, 9, 11) which make up the system by means of a wireless connection and electrical power using replaceable batteries emphasises the portable nature of the system of the invention.

It should also be noted that this invention must not be limited to the embodiments described here, and other configurations may be created by persons skilled in the art in light of this description.

In addition to the system described above, the invention also covers the procedure carried out by the aforementioned system. This procedure comprises the following phases:
a) Deploying the dynamic weighing platform (1) and positioning it at floor level,
b) Positioning the control device (5),
c) Positioning the detection devices (9),
d) Positioning the marking device (11),
e) Electrical connection of the dynamic weighing platform (1), the photocells (10) and the actuators (12) to the control device (5),
f) Programming the control device (5) for a division in ranges of weights to be measured,
g) Programming the control device (5) with a relation between the defined ranges and the actuators (12) in the marking device (11),
h) Programming the first photocell (10) to send a signal to the control device (5) indicating that an animal is on the platform (1),
i) Programming the data processor in the control device (5) to validate the weight measured on the platform (1),
j) Assigning a weight range to the animal being weighed and the corresponding selection of actuators (12),
k) Programming the second photocell (10) to send a signal to the control device (5) indicating that an animal is leaving the platform (1),
l) Programming the data processor in the control device (5) to activate the selected actuators (12).

## Claims

1. System for weighing and marking livestock, which incorporates a dynamic weighing platform (1) which indicates the weight value obtained, **characterised in that** it comprises:
- a control device (5),
- a detection system, and
- a marking device (11),
wherein:
- the dynamic weighing platform (1) comprises hinges (4) so that it can be folded, and handles (3) so that it can be transported,
- the control device (5) comprises an interface for a user to interact with the system, which incorporates a switch (6) and a screen (7), and a data processor connected to the dynamic weighing platform (1),
- the detection system comprises at least two detection devices (9), with each one incorporating a photocell (5) connected to the control device (10), and
- the marking device (11) comprises at least two actuators (12), to activate the two marking elements, connected to the control device (5),
in such a way that the control device (5), the detection devices (9) and the marking device (11) are independent elements which comprise systems of clamps (18) for fixing to a support.

2. System for weighing and marking livestock, according to claim 1, **characterised in that** at least one of the connections from the dynamic weighing platform (1), the photocells (10) and the actuators (12) of the marking device (11) to the control device (5) is wireless.

3. System for weighing and marking livestock, according to claims 1 Or 2, **characterised in that** the control device (5) can be accessed remotely for supervision, modification, updating and review of the system operation.

4. System for weighing and marking livestock, according to claims 1 to 3, **characterised in that** the control device (5) emits an electronic communication when an incident in the system operation is detected.

5. System for weighing and marking livestock, according to claim 4, **characterised in that** the electronic communication is detected in an electronic device.

6. System for weighing and marking livestock, according to claim 5, **characterised in that** the electronic device may be either a computer, a tablet or a mobile telephone.

7. System for weighing and marking livestock, according to claims 1 to 6, **characterised in that** the control device (5) incorporates a light indicator (8) with different coloured lights to indicate the operating status of the system.

8. System for weighing and marking livestock, according to claim 7, **characterised in that** the light indicator (8) indicates the weight range of the animal being weighed.

9. System for weighing and marking livestock, according to any of the claims 1 to 8, **characterised in that** the marking elements are paint sprays (15).

10. System for weighing and marking livestock, according to any of the claims 1 to 5, **characterised in that** each of the sprays (15) incorporates a nozzle (17) to direct the paint.

11. Procedure for marking livestock using the device defined in claims 1 to 10, **characterised in that** it comprises the following phases:
a) Deploying the dynamic weighing platform (1) and positioning it at floor level,
b) Positioning the control device (5),
c) Positioning the detection devices (9),
d) Positioning the marking device (11),
e) Electrical connection of the dynamic weighing platform (1), the photocells (10) and the actuators (12) to the control device (5),
f) Programming the control device (5) for a division in ranges of weights to be measured,
g) Programming the control device (5) with a relation between the defined ranges and the actuators (12) in the marking device (11),
h) Programming the first photocell (10) to send a signal to the control device (5) indicating that an animal is on the platform (1),
i) Programming the data processor in the control device (5) to validate the weight measured on the platform (1),
j) Assigning a weight range to the animal being weighed and the corresponding selection of actuators (12),
k) Programming the second photocell (10) to send a signal to the control device (5) indicating that an animal is leaving the platform (1),
l) Programming the data processor in the control device (5) to activate the selected actuators (12).
